# EUROPEAN PATENT SPECIFICATION

(11) **EP 1 949 707 B1**
(45) Date of publication and mention of the grant of the patent: **21.03.2012**
(21) Application number: 06794741.6
(22) Date of filing: 12.10.2006
(51) Int. Cl.: H04N 9/75, H04N 5/275, G02B 5/124, G02B 5/128

(54) **RETROREFLECTIVE MATERIALS**
RETROREFLEKTIVE MATERIALIEN
MATERIAUX RETROREFLECHISSANTS

(30) Priority: 16.11.2005 GB 0523390
(43) Date of publication of application: 30.07.2008
(73) Proprietor: Reflec PLC, Winsford, Cheshire CW7 3QQ (GB)
(72) Inventor: SAGAR, Brian, Frederick, Cheadle Cheshire SK8 5HY (GB); HERBERT, John, Manchester Lancashire M41 6HF (GB)
(74) Representative: Cawley, Aimee Elizabeth
(86) International application number: PCT/GB2006/003793
(87) International publication number: WO 2007/057630

(56) References cited:
- EP-A2- 0 305 074
- WO-A2-01/20900
- GB-A- 942 657
- GB-A- 2 321 565
- GB-A- 2 367 909
- US-A1- 2003 174 285

## Description

The present invention relates to retroreflective materials of the type which are used in chromakeying techniques within the film and television production industries.

Chromakeying is a technique in which non-spatially related foreground and background images are combined together to create a single composite image. For example, it is well known to key or composite a foreground image, for example an actor or presenter, filmed or recorded in a studio onto a background which has been filmed elsewhere or has been computer generated. Generally, the foreground image is recorded against an evenly lit chromakey background and then an image from another source is keyed in as the background. The background image can, for example be a recorded video camera image or a computer generated image. The keying can be done, for example, by a chromakeying device comprising either dedicated hardware or comprising compositing or other software running on a computing device. Conventionally, the chromakey background is uniform blue or green coloured background, although in theory any colour could be used.

The term filming and recording are used in this document to describe any recording of images, in particular moving images, for example in film recording, television production, video recording, etc.

In this document the term chromakey signal refers to the signal derived from image recording equipment, such as a video camera or a telecine unit, which represents a foreground image that includes a chromakey background. In television and film production, it is generally accepted that a chromakey background must be very evenly illuminated across its entire surface area in order to generate a consistent chromakey signal which will enable a chromakey device to differentiate between the foreground objects and the chromakey background. The chromakey signal needs to be consistent for the chromakeying device to identify the chromakey signal across the entire surface area of the background.

Chromakeying techniques may use a background formed by a screen made from a retroreflective material, for example, retroreflective material sheets fitted or draped over a support. When retroreflective materials are used in chromakeying, the consistency of the chromakey signal can be improved through the inherent design of the retroreflective material. Retroreflective materials have the property of reflecting a substantial proportion of light incident on it from a range of angles, back to the source, with a substantially greater intensity than a simple white surface.

Whilst a retroreflective background will reflect any colour of ambient light, the illumination of the chromakey background from a source may be of a predetermined key colour selected for not being predominant in the foreground objects and/or to create maximum contrast for the chromakey device.

A commercially available, conventional retroreflective material for chromakeying, called Chromatte^{™}, is produced by uniformly coating a fabric with a printing ink containing high refractive index glass beads, which beads have been hemi spherically coated with a thin layer of aluminium. However, this method has constraints as regards the maximum level of reflectivity that can be achieved. This is due to the limitations on the volume of beads that can be accommodated in the ink, while still enabling the ink to have the required characteristics for consistent production. In addition, there is a significant drop off of reflectivity at greater entrance angles β, as is apparent from Table 1 below, which shows reflectivity at an observation angle α of 0.2°:

**Table 1**

| **Entrance Angle β (°)** | **Chromatte Reflectivity (cd.lx⁻¹ m⁻²)** |
|---|---|
| 5 | 33.3 |
| 20 | 29.5 |
| 30 | 25.3 |
| 40 | 20.1 |
| 50 | 14.8 |
| 60 | 9.9 |
| 65 | 7.4 |
| 70 | 5.3 |
| 75 | 3.1 |
| 80 | 1.6 |
| 81.5 | 1.2 |

A problem arises in generating a consistent chromakey signal when a retroreflective material background includes a substantially vertical back drop and a substantially horizontal floor surface. There will generally be a significant difference between the intensity of the chromakey signal reflected back to the camera from the backdrop to that reflected back from the floor due to the difference in the entrance angle. This inconsistency in the reflected chromakey signal makes the chromakeying process difficult.

In addition it is not possible at present using known retroreflective materials to simultaneously chromakey both background and foreground objects that are at significantly different depths with respect to each other within the same television or film set. During filming, retroreflective materials are generally illuminated by a light source which is co-incident with the lens of the filming television or film camera. This means that there is a direct inverse square law correlation between the distance of a retroreflective material from the light source and the intensity of illumination of that material. That is, the intensity of illumination of an object at a distance d from an illuminating source varies according to a 1/d² relationship. So the foreground within a television or film set will be illuminated with a higher intensity than the background, as the background is a greater distance away from the common light source.

Where a retroreflective background is used during filming, control over the intensity of the reflected chromakey signal is maintained by controlling the level of illumination from the light source. The maintenance of the intensity of the chromakey signal is required for the chromakeying device to operate effectively. However, the level of control using the light source is limited. This can be a problem where, for aesthetic reasons, it is necessary to use a particular camera aperture size for shooting a scene. The chosen aperture size may then put the chromakey signal beyond the range of control available by controlling the intensity of the light source and will thus result in a chromakey signal beyond the range of the chromakey device.

Finally, when chromakey backgrounds are used in three dimensional motion tracking systems it is necessary to include tracking markers on the background. This enables the post production processes to align the movement in the foreground and the background accurately. There are problems associated with placing tracking markers on a chromakey background that will allow software to differentiate between the markers and the background yet still enable a camera to produce a consistent chromakey signal.

GB2,321,565, GB2,321,814 and GB2,338,367 relate to chromakeying technology using retroreflective background materials. However, it can be difficult to design and produce retroreflective sheeting for use in chromakeying which is robust and flexible. The materials need to be robust so that they can be, for example, reused repeatedly, cleaned, repeatedly folded away for storage and transportation or walked upon. The materials need to be flexible so that they can be draped or fitted around objects so as to form a suitable background or foreground.

There are also advantages in having a chromakeying retroreflective material in the form of an easily portable pack that can be used to erect a chromakey background. With a traditional blue or green fabric, the creases generated by the continual process of folding and storage cause problems with the chromakeying process.

A first aspect of the present invention aims to overcome some of the problems outlined above so as to enable additional control over the intensity of the reflected chromakey signal, for example, overcoming the problem of differing distances between retroreflective materials and the light source illuminating them.

According to the present invention there is provided a method of preparing a set design for chromakey filming, according to claim 1.

The series includes a retroreflective material in which all the transparent elements have a reflective coating. This enables the series (a library) of retroreflective materials to be provided, with reflectivity levels calibrated so as to enable different retroreflective materials be selected to dress different parts of a set in preparation for chromakey filming.

In the materials in the series, some of the transparent elements have a reflective coating and so may contribute to the reflectivity of the material (depending on their orientation) and the rest of the transparent elements are not coated and so do not contribute to the reflectivity of the material. By varying the proportion of coated to non-coated transparent elements, the reflectivity of the material can be adjusted depending on the end use requirement for that material. This provides an extra degree of flexibility for existing chromakeying techniques.

The reflective coating may be a partial reflective coating, in that each transparent element has a coating which only partially covers its surface area.

Each retroreflective material in the series may comprise a backing material, a layer of adhesive covering a surface of the backing material and a plurality of the transparent elements partially embedded in and bonded to the adhesive. The backing material may be in sheet form with the adhesive covering a major surface, and may for example be a sheet of evenly woven cotton fabric. The surface of the backing material onto which the adhesive is applied is preferably flat.

The adhesive may be a flexible polymer adhesive, as this will generally result in a retroreflective material that is flexible, wear resistant and which can be laundered. The adhesive may be selected from one of the following: a silicone adhesive; an acrylic adhesive; a polyurethane adhesive, and is preferably curable so as to generate co-valent cross link bonding within the polymer, to the backing material and to the retroreflective elements. In addition a black pigment may be added to the adhesive, so that the adhesive is able to absorb stray light, in particular light directed to it by the non-coated transparent elements.

The layer of adhesive preferably has a thickness that is less than half the average maximum dimension of the transparent elements. If the adhesive layer is too thick as compared to the dimensions of the transparent elements, the elements can become too deeply embedded within the adhesive and the adhesive masks the reflective properties of the coated elements. If the adhesive layer is too thin as compared to the dimensions of the transparent elements, the adhesive bonding to the elements may be too weak so as to prejudice the wear resistance and lauderability of the retroreflective material.

The reflective coating may be applied to the elements so that a continuous surface of each coated transparent element covering between one third and one half of the surface area of the transparent element is covered in a reflective coating. In one embodiment, the transparent elements are substantially spherical glass micro-beads, in which case the transparent elements may be hemi spherically covered in a reflective coating. The coating may be a reflective metal, for example aluminium.

If the retroreflective materials in the series are to maintain a reasonable level of reflectivity for a range of entrance angles, it is preferred that the coated transparent elements are not aligned with respect to each other. In particular the coated transparent elements may be randomly oriented with respect to each other. Retroreflective materials with this feature will characteristically exhibit a good reflectivity response over wide angles. Where a retroreflective material with this feature is creased, so long as the angle that the crease subtends to the source of chromakey illumination, falls within the specification of the retroreflective material, then the creases will not cause any problems for the chromakeying process. The retroreflective materials according to the present invention improve the angularity of response as compared to the commercially available retroreflective material Chromatte^{™}. Also in relation to subjects or objects with irregular features such as puppeteers, in relation to puppet performances. Such a puppeteer dressed in a garment made of retroreflective material can be more effectively hidden than one dressed in a blue or green garment.

The present invention also provides a set design suitable for filming using chromakeying techniques, comprising a plurality of objects in which different objects are covered in different ones of the series of retroreflective materials described above. The different retroreflective materials may be used to cover different objects dependent on: their distance from a source of chromakeying illumination; their orientation with respect to a source of chromakeying illumination; and/or their orientation with respect to a camera. The different retroreflective materials are selected from the series so that a filming camera receives a consistent chromakeying signal. At least one of the objects may be a subject, for example a puppeteer, and each subject is covered in a costume comprising one of the series of retroreflective materials.

The present invention also provides a set design suitable for filming using chromakeying techniques, comprising at least one object which is covered in a first retroreflective material from the series described above, wherein, a second retroreflective material from the series and made up of a different proportion of coated transparent elements from the first is applied to the set design as a tracking marker. Preferably, the reflected chromakey signal from the different materials is separated in intensity by at least half and preferably by at least one f stop. There needs to be a differentiation between the reflected chromakey signal from the background and the reflected chromakey signal from the tracking markers of at least one f stop difference for a tracing marker to be discriminated from the background. The term 'f stop' refers to an incremental scale used to calibrate a television or film camera iris. A change of one f stop represents a halving or doubling of the light falling on the camera image plane. It is also used to express the increase or decrease of incident light on a subject.

The invention will now be described by way of example only and with reference to the accompanying schematic drawings, wherein:
Figure 1 shows a studio set in which a background, foreground figure and floor are covered in retroreflective material from a series of retroreflective materials according to the present inventions;
Figure 2 shows a graph of reflectivity measured in cd/lx.m² against metallised bead percentage, at a 5° entrance angle β; and
Figure 3 shows a cross-sectional view of a close up of a retroreflective material from a series according to the present invention.

The present invention provides a series of retroreflective materials, for example in sheets, with accurately and quantitatively regulated levels of reflectivity. Each material preferably has fabric-like physical properties, such as tear resistance and flexibility. The present invention teaches the production of materials with carefully graded reflectivity over a continuously variable range. Thus, a library of retroreflective materials with graded levels of reflectivity can be manufactured, so that once the desired level of reflectivity required for use at a predetermined distance from the chromakeying illumination and for use at a predetermined entry angle and observation angle is determined, the grade of material having that reflectivity under those conditions can be selected for use.

Using such materials it is possible to tailor the reflectivity level of a retroreflective material used in a film or television set to match the requirement of any filming or recording situation. In particular, it becomes possible to create a set using retroreflective materials with different levels of reflectivity, graded to accommodate different distances from the camera, different entrance angles of chromakey illumination and different camera observation angles. The retroreflective materials with different levels of reflectivity may be chosen such that the reflected chromakey signal received by the camera from each such retroreflective material used in the set, has a matched intensity within a predetermined limited range of intensities recognisable by a chromakey device.

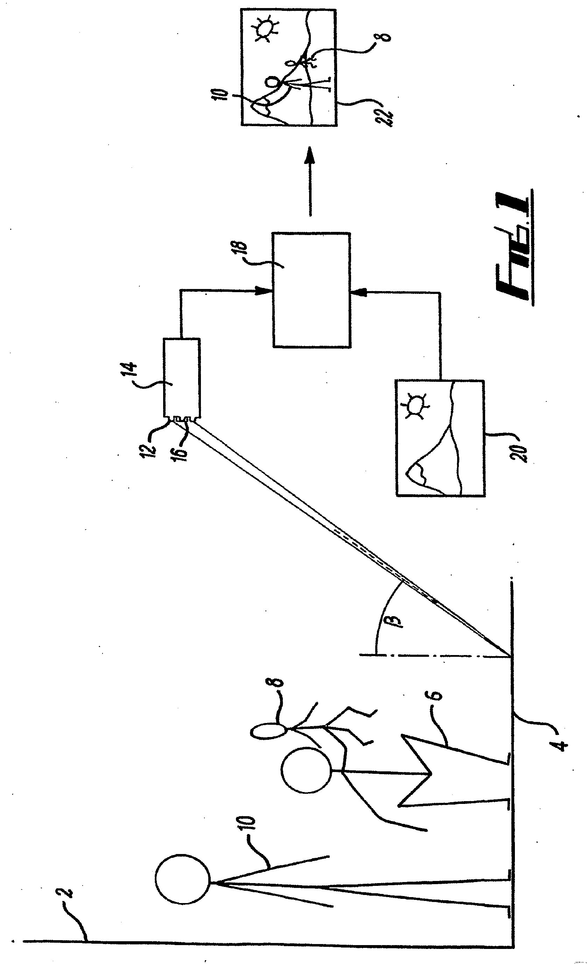

Figure 1 shows a studio set for recording a puppet show. The background (2) is covered with a retroreflective material having a first reflectivity and the floor (4) is covered with a retroreflective material having a second higher reflectivity. In addition a puppeteer (6) is clothed from head to foot in garments made of a retroreflective material having a third reflectivity lower than the first reflectivity. The puppeteer (6) operates a puppet (8) and the studio set is occupied by a performer (10) who interacts with the puppet (8) operated by the puppeteer.

The performance of the performer (10) and puppet (8) is recorded by a camera (14) having an aperture (16). The studio set of Figure 1 is illuminated for chromakeying purposes by a ring of high intensity light emitting diodes (12) of a single colour arrayed around the camera aperture (16). The image recorded by the camera (14) is output as a signal incorporating chrominance and luminance information and is passed to a chromakeying device (18). The chromakeying device (18) may comprise purpose built hardware or may comprise a computing device on which is run chromakeying or compositing software. On receiving the signal from the camera (14), the chromakeying device distinguishes the performer (10) and puppet (8) from the chromakey signal reflected from the combined retroreflective surfaces including the background (2), floor (4) and puppeteer (6). The chromakeying device superimposes an independent image (20) of mountain scenery onto the combined retroreflective surfaces and so the performer (10) and puppet (8) appear in a composite image (22) generated by the chromakeying device (18) as if they were in the mountain scene of the independent image (20).

The background (2) of the set in Figure 1 is covered in a retroreflective material having a first level of reflectivity R₁, so that the chromakey signal reflected from the background (2) as received at the camera (14) has an intensity I₁. The puppeteer (6) is dressed in a retroreflective material having a second level of reflectivity R₂, which is less then R₁, by an amount such that the chromakey signal reflected from the puppeteer (6) as received by the camera (14) has an intensity I₂ which is close to the intensity I₁ of the chromakey signal reflected from the background (2). To achieve this the reflectivity R₂ of the material in which the puppeteer (6) is dressed must be less than the reflectivity of the material in which the background (2) is covered. This is because, the puppeteer (2) is closer to the source of chromakey illumination, ie. is closer to the ring of LEDs (12) than the background (2) and so will experience a higher level of illumination from the LEDs (12) than the background. Also, as the puppeteer (6) is closer to the camera aperture (16) than the background (2) the reflected chromakey signal from the puppeteer will not be as attenuated as that reflected back from the background (2).

The retroreflective material covering the floor (4) is likely to require a level of reflectivity R₃, which is higher than that covering the background (2). This is because, in general the reflectivity of a retroreflective material tends to decrease the larger the angle of incidence or entry β. In fact, the angle β may often exceed the specified performance angle of a retroreflective material. The angle of incidence or entry angle β, per point source is the angle between the illumination axis and the reflector axis. The illumination axis is the line from the effective centre of the light source to the reflector centre (for example the centre of an individual reflective bead). The reflector axis is that axis along which light is reflected back by the reflector. The average angle of incidence of light from the LEDs (12) on the floor (4) will be much higher than the average angle of incidence of light from the LEDs (12) on the background (2). In the set shown in Figure 1 the camera (14) is positioned so that it directly faces the background (2) so that the average angle of light from the LEDs (12) incident on the background is normal to the background and so the angle β will be close to zero. Because, reflectivity decreases with increasing angle of incidence β, the floor covering (4) with a relatively high angle of incidence β will require a higher overall reflectivity R₃, than the reflectivity R₁ of background covering (2), if the reflected chromakey signal from the floor is to have an intensity I₃ as received at the camera (14) which is close to the intensity of light I₁ and I₂ of the chromakey signal from the background (2) and the puppeteer (6) as received at the camera (14). Only if the three light intensities I₁ to I₃ are within a predetermined range, ie. less than one f stop value, preferably less than one half of an f stop value, will the camera (14) provide a consistent chromakey signal across the background (2) for the chromakey device (18) to replace this region of consistency with the background image (20). Ideally, the intensities I₁ to I₃ are as closely matched as possible when the camera (14) is directly facing the background (2) to take into account variations in reflectivity with incident angle, should the camera (14) be panned to the left (out of the paper) or right (into the paper) or up or down.

The observation angle α is the angle between the illumination axis and the observed reflected beam.

The present invention provides a series or library of retroreflective materials of graduated reflectivity for which the reflectivity level can be calibrated so as to allow the matching of reflectivity levels from different parts of a set. The library may include retroreflective materials in which a portion of the transparent elements are covered in a reflective coating and may include retroreflective materials in which all of the transparent elements are covered in a reflective coating.

There is a direct correlation between the entrance angle β and the intensity of the reflected chromakey signal. This means that the intensity of the chromakey signal (for a predetermined set distance d between retroreflective material and chromakey illumination source) can be correlated with the entrance angle β, to provide calibration data comprising reflectivity values for each retroreflective material at a graduated range of entrance angles β.

There is also a direct correlation between the distance d between a retroreflective material and the chromakey illumination source and the intensity of the reflected chromakey signal (for a predetermined set angle of incidence β), according to the inverse square law of light propagation. This means that the intensity of the chromakey signal can be correlated with the distance d, to provide calibration data comprising reflectivity values for each retroreflective material for a graduated range of distances d. It is also possible to extend the calibration data for different reflectivity retroreflective materials to include a graduated range of distance parameters versus entrance angle parameters.

Thus, if a complex irregular surface is required as a backing, particularly if there are significant differences of depth in the background, then such data would enable such a background to be constructed from a range of retroreflective materials having different reflectivity in accordance with the calibration data for these retroreflective materials. In this way a range of calibrated retroreflective materials can be used to equalise the reflectivity between foreground and background objects and objects with surfaces oriented at different angles to the camera so as to achieve the type of shot described in relation to Figure 1 easily.

When retroreflective backgrounds are used with 3D tracking systems it is crucial to include tracking markers. This enables the post production systems to synchronise the background image movement with that of the foreground camera. In a recording of a set backed with retroreflective materials it is important that there is differentiation between the retroreflective background and the tracking markers. Usually a difference of one f stop is required between the background and the tracking markers. Using the present invention the tracking markers can be provided as shapes of calibrated retroreflective material that are within one f stop tolerance that would allow the tracking software to recognise the markers whilst still enabling the whole background to provide a consistent chromakey signal.

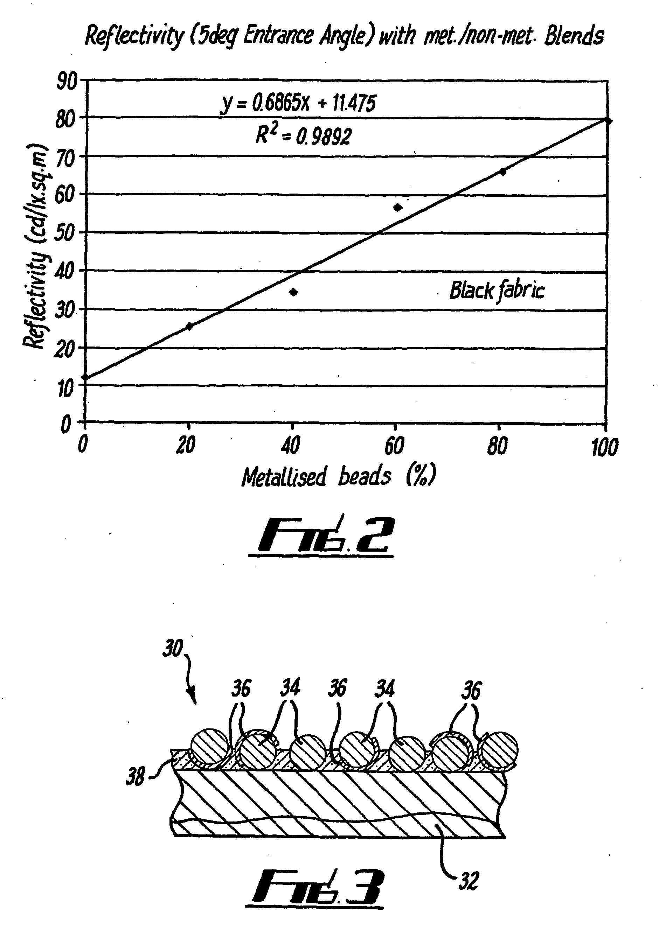

The method of production of retroreflective material according to the present invention increases the overall level of retroreflectivity of the resulting material (30), shown in Figure 3, by coating the surface of the material, for example fabric (32), with a mono-layer of close packed, randomly orientated elements. The elements may be glass micro-beads (34) or micro-prisms. All or a proportion of the elements are partly coated with aluminium (36) so as to form retroreflective elements. Typically, glass beads which are hemi spherically coated with aluminium are used as the retroreflective elements. In Figure 3, all but two of the microbeads shown are coated with aluminium. The level of reflectivity of the resultant retroreflective material increases as the proportion of the elements which are retroreflective increases. The retroreflective elements are randomly oriented on the backing material and so the resultant retroreflective material maintains high levels of reflectivity even at relatively high entrance angles β. This is shown in Table 2, for a composition called SC228 in which 100% of the retroreflective elements are glass micro-beads which are hemi spherically coated with aluminium.

**Table 2**

| **Entrance Angle β (°)** | **SC228 Reflectivity (cd.lx⁻¹m⁻²)** |
|---|---|
| 5 | 79.1 |
| 20 | 75.2 |
| 30 | 69.3 |
| 40 | 60.0 |
| 50 | 48.6 |
| 60 | 34.8 |
| 65 | 28.1 |
| 70 | 20.8 |
| 75 | 14.6 |
| 80 | 9.0 |
| 81.5 | 7.0 |

It can be seen from a comparison of Table 1 with Table 2, that the SC228 has significantly higher peak reflectivity as compared to the commercially available Chromatte^{™}. Furthermore, the reflectivity at wider entrance angles β is also maintained as compared with the Chromatte^{™} material. The SC228 material gives around 2.5 times higher reflectivity than Chromatte^{™} at an entrance angle β of 20° and around 5.6 times at an entrance angle of 80°, when the observation angle α is 0.2°. As a consequence of these higher levels of reflectivity at wider entrance angles β it becomes possible to use a retroreflective chromakeying system both outdoors and at greater camera distances.

One method of making such a material is to coat a permanent adhesive layer (38) directly onto a chromakeying backing material, such as fabric (32), and apply the elements (34) onto the adhesive in a random orientation. For example, the elements may be glass micro-beads a proportion of which are made into reflective elements by hemispherically coating them with aluminium (36). The adhesive (38) is then cured to ensure that the beads are securely bonded to the backing material (32) and are resistant to abrasion, etc. There is a linear relationship between the level of reflectivity of the resulting retroreflective material and the percentage of the elements which are retroreflective elements. This is shown in Figure 2, which is a graph of reflectivity against metallised bead percentage, at a 5° entrance angle β and 0.2 observation angle α.

It is important that if a woven fabric is used to make the retroreflective material according to the present invention it is as evenly woven as possible. This ensures a flat and even surface on which to coat the adhesive and micro-beads.

Preferably, the method of production of the background material is continuous. A roll of fabric (32) is loaded into a support and is threaded through sets of rollers. The fabric may, for example, be evenly woven cotton or felt treated with flame retardant, having a width of typically 1.0m to 1.8m. Where the retroreflective material is required for flooring, the backing material typically used may be of a rubber or vinyl like material. The rollers transport the fabric from the support and through the assembly. A layer of polymer adhesive is applied continuously to the length of fabric by any suitable method, for example, rotary screen printing, knife coating or gravure printing as the fabric moves through an application device. The adhesive may, for example be a non-flammable flexible silicone, acrylic or polyurethane polymer adhesive. The application device applies the adhesive so as to apply a layer of adhesive which is around half the diameter of the microbeads. A flexible adhesive is necessary so that the resultant retroreflective material is flexible, so it can be draped and folded as required.

The glass micro-beads to be applied to the adhesive layer may, for example be of a diameter of between 20 to 150 µm, preferably 40 to 90µm and more preferably 60µm. The thickness of the adhesive should be no more than two thirds of the diameter of a bead and no less than one third of the diameter of the bead and most preferably around half the thickness of the bead. If the thickness of the adhesive is too great, the adhesive covers up too much of the coated beads, thereby reducing retroreflectivity. If the thickness of the adhesive is too low, the resultant retroreflective material becomes less durable, as the beads are more likely to become detached from the adhesive layer.

Before use in this process, the microbeads undergo a silane treatment. The desired proportions of microbeads are loaded into a hopper, for example 60%, are hemispherically coated with aluminium. The remaining 40% are not coated. The coated and uncoated beads are thoroughly mixed. As the fabric with the adhesive layer applied is passed under the hopper, the beads are sprinkled onto the adhesive layer. In this way the beads fall randomly onto the adhesive, with a random 40% to 60% mix of uncoated to coated beads. Alternatively, the fabric with the adhesive applied can be passed through a trough containing the desired mixture of coated and uncoated microbeads. Using these methods, the beads attach to the adhesive with a substantially random orientation, so that for the metallised beads, the metallised portion of the bead will be oriented randomly. The fabric with the adhesive and beads on it is then passed through a set of rollers which press the beads into the adhesive to around half their diameter. After this the adhesive is cured to ensure covalently bonded cross-linking of the polymer adhesive, which bonds the microbeads to the fabric. The curing can be caused by exposure to heat or ultra violet radiation or over longer timescales by ambient conditions or can be caused by any suitable method for the adhesive used, as is well known in the art. Then the excess beads that are not adequately embedded within the adhesive are removed, for example by vibrating the fabric and/or vacuuming the beads up from the fabric.

The graph in Figure 2 and the equation representing the linear relationship between reflectivity (y) and metallised bead percentage (x), as shown in Figure 2, can be used to calculate the precise ratio of metallised to non-metallised beads required to give a desired level of retroreflection. For example, to mimic the reflectivity of the commercially available Chromatte^{™}, with a reflectivity of 30cd/Ix.m², requires the use of a blend of beads only 30% of which are hemispherically coated. This measurement of reflectivity was made at an observation angle α of 0.2° and at an entrance angle β of 5°. Similar relationships can be computed at other observation and entrance angles to suit the circumstances for which the resultant retroreflective materials are required.

The precise relationship between reflectivity and the percentage of reflective to non-reflective elements will depend on, for example the materials used to make the elements, in particular their refractive index, their size and shape, the coating material and the proportion of the element coated. Where spherical glass micro-beads are used as the elements, relevant factors to performance are the optical quality of the beads, the refractive index of the glass, the diameter of the beads, the nature and thickness of the adhesive layer and the depth to which the beads are covered in the adhesive. It has been found that the best results are achieved where the refractive index of the glass is between 1.8 and 2.2, more preferably 1.9. The bead size can vary, but the preferred range of diameters is 20µm to 150µm, more preferably between 40µm and 90µm, more preferably 60µm. The beads are preferably as spherical as possible and of high optical clarity.

When using retroreflective materials in chromakeying applications it has been found advantageous to avoid the influence of background stray light. This can be achieved by using a fabric which is dyed black and which incorporates black pigment in the adhesive layer. When this is done even small percentages of non-metalised beads are effective in removing stray light, by transmitting the light to the light absorbing backing material and adhesive layer.

In order to meet fire regulations it is important to use a fire retardant fabric such as Proban treated cotton and to ensure the adhesive material is non-flammable.

The present invention provides a series of graded retroreflective materials, each having a different reflectivity. The material may be available in continuous lengths approximately 1.0 to 1.8m wide, stored on a roll with a length of up to approximately 1000m. Then portions of material of the desired reflectivity can be cut and sewn depending on the desired characteristics for the set to be dressed.

## Claims

1. A method of preparing a set design suitable for chromakey filming, the method comprising the steps of:
(i) providing a series of retroreflective materials with graded and calibrated levels of reflectivity, wherein each material in the series comprises a plurality of transparent elements, some of the transparent elements have a reflective coating and each material in the series has a different proportion of the plurality of transparent elements which are covered with a reflective coating, as compared to the other materials in the series, and
(ii) selecting different retroreflective materials from the series to dress different parts of the set in preparation for chromakey filming such that the reflected chromakey signal from each such retroreflective material of the set has an intensity within a predetermined limited range of intensities.

2. A method according to claim 1 wherein the step of providing the series of retroreflective materials comprises providing a material in which all the transparent elements have a reflective coating.

3. A method according to claim 1 or claim 2 wherein the reflective coating is a partial reflective coating.

4. A method according to any one of claims 1 to 3, wherein each material in the series comprises a backing material, a layer of adhesive covering a surface of the backing material and the plurality of the transparent elements partially embedded in and bonded to the adhesive.

5. A method according to claim 4 wherein the backing material is in sheet form with the adhesive covering a major surface.

6. A method according to claim 4 or 5 wherein the backing material is a sheet of evenly woven cotton fabric.

7. A method according to any one of claims 4 to 6 wherein the adhesive is a flexible polymer adhesive.

8. A method according to any one of claims 4 to 7 wherein the adhesive is selected from one of the following: a silicone adhesive an acrylic adhesive; a polyurethane adhesive.

9. A method according to any one of claims 4 to 8 comprising adding a black pigment to the adhesive.

10. A method according to any one claims 4 to 9 wherein the adhesive is curable so as to generate covalent cross linking bonding.

11. A method according to any one of claims 4 to 10 wherein the layer of adhesive has a thickness that is around half the maximum dimension of the transparent elements.

12. A method according to any one of the preceding claims comprising covering a continuous surface of each coated transparent element covering between one third and two thirds of the surface area of the transparent element in a reflective coating.

13. A method according to any one of the preceding claims wherein the transparent elements are substantially spherical glass micro-beads.

14. A method according to claim 13 wherein the transparent elements are hemispherically covered in a reflective coating.

15. A method according to any one of the preceding claims wherein the coating is a reflective metal.

16. A method according to any one of the preceding claims wherein the coated transparent elements are not aligned with respect to each other.

17. A method according to claim 16 wherein the coated transparent elements are randomly oriented with respect to each other.

18. A method according to any one of claims 4 to 17 wherein the surface of the backing material onto which the adhesive is applied is flat.

19. A set design suitable for filming using chromakeying techniques, comprising a plurality of objects in which different objects are covered in different ones of the series of retroreflective materials provided and selected according to the method of any one of claims 1 to 18.

20. A set design according to claim 19 wherein different retroreflective materials are used to cover different objects dependent on their distance from a source of chromakeying illumination.

21. A set design according to claim 19 or claim 20 wherein different retroreflective materials are used to cover different objects dependent on their orientation with respect to a source of chromakeying illumination.

22. A set design according to any one of claims 19 to 21 wherein different retroreflective materials are used to cover different objects dependent on their orientation with respect to a filming camera.

23. A set design according to any one of claims 19 to 21 wherein at least one of the objects is a subject and each subject is covered in a costume comprising one of the series of retroreflective materials.

24. A set design suitable for filming using chromakeying techniques, comprising at least one object which is covered in a retroreflective material from a series of such materials provided and selected according to the method of any one of claims 1 to 18.

25. A set design suitable for filming using chromakeying techniques, comprising at least one object which is covered in a first retroreflective material provided and selected from a series according to any one of claims 1 to 18 and wherein a second retroreflective material provided and selected from the series made up of a different proportion of coated transparent elements from the first is applied to the set design as a tracking marker.

## Patentansprüche

1. Verfahren zur Herstellung eines Set-Designs, das für das Chroma-Key-Filmen geeignet ist, wobei das Verfahren die folgenden Schritte aufweist:
(i) Bereitstellen einer Reihe von retroreflektierenden Materialien mit abgestuften und geeichten Niveaus des Reflexionsvermögens, wobei ein jedes Material in der Reihe eine Vielzahl von transparenten Elementen aufweist, wobei einige der transparenten Elemente eine reflektierende Beschichtung aufweisen, und wobei ein jedes Material in der Reihe einen unterschiedlichen Anteil der Vielzahl von transparenten Elementen aufweist, die mit einer reflektierenden Beschichtung überzogen sind, verglichen mit den anderen Materialien in der Reihe; und
(ii) Auswählen von unterschiedlichen retroreflektierenden Materialien aus der Reihe, um unterschiedliche Teile des Sets bei der Vorbereitung für das Chroma-Key-Filmen fertigzustellen, so dass das reflektierte Chroma-Key-Signal von einem jeden derartigen retroreflektierenden Material des Sets eine Stärke innerhalb eines vorgegebenen begrenzten Bereiches von Stärken aufweist.

2. Verfahren nach Anspruch 1, bei dem der Schritt des Bereitstellens der Reihe von retroreflektierenden Materialen den Schritt des Bereitstellens eines Materials aufweist, bei dem alle transparenten Elemente eine reflektierende Beschichtung aufweisen.

3. Verfahren nach Anspruch 1 oder Anspruch 2, bei dem die reflektierende Beschichtung eine teilweise reflektierende Beschichtung ist.

4. Verfahren nach einem der Ansprüche 1 bis 3, bei dem ein jedes Material in der Reihe ein Trägermaterial aufweist, wobei eine Klebstoffschicht eine Oberfläche des Trägermaterials bedeckt, und wobei die Vielzahl der transparenten Elemente teilweise im Klebstoff eingebettet und damit verbunden ist.

5. Verfahren nach Anspruch 4, bei dem das Trägermaterial in Schichtform vorliegt, wobei der Klebstoff eine Hauptfläche bedeckt.

6. Verfahren nach Anspruch 4 oder 5, bei dem das Trägermaterial eine Schicht aus gleichmäßig gewebtem Baumwollstoff ist.

7. Verfahren nach einem der Ansprüche 4 bis 6, bei dem der Klebstoff ein elastischer Polymerklebstoff ist.

8. Verfahren nach einem der Ansprüche 4 bis 7, bei dem der Klebstoff unter einem der folgenden ausgewählt wird: ein Silikonklebstoff; ein Acrylklebstoff; ein Polyurethanklebstoff.

9. Verfahren nach einem der Ansprüche 4 bis 8, das den Schritt des Hinzufügens eines schwarzen Pigmentes zum Klebstoff aufweist.

10. Verfahren nach einem der Ansprüche 4 bis 9, bei dem der Klebstoff aushärtbar ist, um so eine kovalente Vermetzungsbindung zu erhalten.

11. Verfahren nach einem der Ansprüche 4 bis 10, bei dem die Klebstoffschicht eine Dicke aufweist, die etwa die Hälfte der maximalen Abmessung der transparenten Elemente beträgt.

12. Verfahren nach einem der vorhergehenden Ansprüche, das den Schritt des Bedeckens einer kontinuierlichen Oberfläche eines jeden beschichteten transparenten Elementes aufweist, wobei zwischen ein Drittel und zwei Drittel der Oberfläche des transparenten Elementes in einer reflektierenden Beschichtung bedeckt werden.

13. Verfahren nach einem der vorhergehenden Ansprüche, bei dem die transparenten Elemente im Wesentlichen sphärische Glasmikrokilgelchen sind.

14. Verfahren nach Anspruch 13, bei dem die transparenten Elemente halbkugelförmig mit einer reflektierenden Beschichtung bedeckt sind.

15. Verfahren nach einem der vorhergehenden Ansprüche, bei dem die Beschichtung ein reflektierendes Metall ist.

16. Verfahren nach einem der vorhergehenden Ansprüche, bei dem die beschichteten transparenten Elemente mit Bezugnahme zueinander nicht ausgerichtet sind.

17. Verfahren nach Anspruch 16, bei dem die beschichteten transparenten Elemente mit Bezugnahme zueinander wahllos ausgerichtet sind.

18. Verfahren nach einem der Ansprüche 4 bis 17, bei dem die Oberfläche des Trägermaterials, auf der der Klebstoff aufgebracht wird, flach ist.

19. Set-Design, das für ein Filmen bei Anwendung der Chroma-Key-Verfahren geeignet ist, das eine Vielzahl von Objekten aufweist, wobei verschiedene Objekte mit verschiedenen von einer Reihe von retroreflektierenden Materialien bedeckt sind, die entsprechend dem Verfahren nach einem der Ansprüche 1 bis 18 bereitgestellt und ausgewählt werden.

20. Set-Design nach Anspruch 19, bei dem verschiedene retroreflektierende Materialien verwendet werden, um verschiedene Objekte in Abhängigkeit von ihrem Abstand von einer Quelle der Chroma-Key-Beleuchtung zu bedecken.

21. Set-Design nach Anspruch 19 oder Anspruch 20, bei dem verschiedene retroreflektierende Materialien verwendet werden, um verschiedene Objekte in Abhängigkeit von ihrer Ausrichtung mit Bezugnahme auf eine Quelle der Chroma-Key-Beleuchtung zu bedecken.

22. Set-Design nach einem der Ansprüche 19 bis 21, bei dem verschiedene retroreflektierende Materialien verwendet werden, um verschiedene Objekte in Abhängigkeit von ihrer Ausrichtung mit Bezugnahme auf eine Filmkamera zu bedecken.

23. Set-Design nach einem der Ansprüche 19 bis 21, bei dem mindestens eines der Objekte eine Person ist, und wobei jede Person in ein Kostüm gehüllt ist, das eines aus der Reihe der retroreflektierenden Materialien aufweist.

24. Set-Design, das für das Filmen bei Anwendung der Chroma-Key-Verfahren geeignet ist, das mindestens ein Objekt aufweist, das mit einem retroreflektierenden Material aus einer Reihe von derartigen Materialien bedeckt ist, die entsprechend einem Verfahren nach einem der Ansprüche 1 bis 18 bereitgestellt und ausgewählt werden.

25. Set-Design, das für das Filmen bei Anwendung der Chroma-Key-Verfahren geeignet ist, das mindestens ein Objekt aufweist, das mit einem ersten retroreflektierenden Material bedeckt ist, das aus einer Reihe entsprechend einem der Ansprüche 1 bis 18 bereitgestellt und ausgewählt wird, und wobei ein zweites retroreflektierendes Material, das aus der Reihe bereitgestellt und ausgewählt wird, die aus einem unterschiedlichen Anteil von beschichteten transparenten Elementen aus dem ersten besteht, auf das Set-Design als eine Tracking,Markierung aufgebracht wird.

## Revendications

1. Procédé de préparation d'une décoration scénique pour la prise de vues à incrustation couleur, le procédé comprenant les étapes ci-dessous :
(i) fourniture d'une série de matériaux rétroréflechissants, présentant des niveaux de réflectivité gradués et calibrés, chaque matériau dans la série comprenant plusieurs éléments transparents, certains des éléments transparents comportant un revêtement réfléchissant et chaque matériau dans la série comportant une proportion des plusieurs éléments transparents, recouverts par un revêtement réfléchissant, différente de celle des autres matériaux dans la série ; et
(ii) sélection de différents matériaux rétréoréfléchissants dans la série pour établir différentes parties de la décoration lors de la préparation de la prise de vues à incrustation couleur, de sorte que le signal d'incrustation couleur de chaque dit matériau rétroréfléchissant de la décoration présente une intensité comprise dans un intervalle limité prédéterminé d'intensités.

2. Procédé selon la revendication 1, dans lequel l'étape de fourniture de la série de matériaux rétroréflechissants comprend l'étape de fourniture d'un matériau dans lequel tous les éléments transparents comportent un revêtement réfléchissant.

3. Procédé selon les revendications 1 ou 2, dans lequel le revêtement réfléchissant est un revêtement réfléchissant partiel.

4. Procédé selon l'une quelconque des revendications 1 à 3, dans lequel chaque matériau dans la série comprend tm matériau de support, une couche d'adhésif recouvrant une surface du matériau de support, et les plusieurs éléments transparents partiellement noyés dans l'adhésif et reliés à celui-ci.

5. Procédé selon la revendication 4, dans lequel le matériau de support a la forme d'une feuille, l'adhésif recouvrant une surface majeure.

6. Procédé selon les revendications 4 ou 5, dans lequel le matériau de support est constitué par une feuille de tissu de coton à tissage régulier.

7. Procédé selon l'une quelconque des revendications 4 à 6, dans lequel l'adhésif est un adhésif polymère souple.

8. Procédé selon l'une quelconque des revendications 4 à 7, dans lequel l'adhésif est sélectionné dans le groupe constitué de : un adhésif à base de silicone ; un adhésif acrylique ; un adhésif de polyuréthane.

9. Procédé selon l'une quelconque des revendications 4 à 8, comprenant l'étape d'addition d'un pigment noir dans l'adhésif.

10. Procédé selon l'une quelconque des revendications 4 à 9, dans lequel l'adhésif peut être durci, de sorte à assurer une liaison à réticulation covalence.

11. Procédé selon l'une quelconque des revendications 4 à 10, dans lequel la couche d'adhésif a une épaisseur représentant environ la moitié de la dimension maximale des éléments transparents.

12. Procédé selon l'une quelconque des revendications précédentes, comprenant l'étape de couverture d'une surface continue de chaque élément transparent revêtu, recouvrant entre un tiers et deux tiers de l'aire de surface de l'élément transparent d'un revêtement réfléchissant.

13. Procédé selon l'une quelconque des revendications précédentes, dans lequel les éléments transparents sont des microbilles de verre pratiquement sphériques.

14. Procédé selon la revendication 13, dans lequel les éléments transparents sont recouverts de manière hémisphérique d'un revêtement réfléchissant.

15. Procédé selon l'une quelconque des revendications précédentes, dans lequel le revêtement est constitué par un métal réfléchissant.

16. Procédé selon l'une quelconque des revendications précédentes, dans lequel les éléments transparents revêtus ne sont pas alignés les uns avec les autres.

17. Procédé selon la revendication 16, dans lequel les éléments transparents revêtus sont orientés de manière aléatoire les uns par rapport aux autres.

18. Procédé selon l'une quelconque des revendications 4 à 17, dans lequel la surface du matériau de support sur laquelle l'adhésif est appliqué est plate.

19. Décoration scénique appropriée pour la prise de vues utilisant des techniques à incrustation couleur, comprenant plusieurs objets, différents objets étant recouverts de différents matériaux rétroréflechissants de la série, fournis et sélectionnés par le procédé selon l'une quelconque des revendications 1 à 18.

20. Décoration scénique selon la revendication 19, dans laquelle différents matériaux rétroréflechissants sont utilisés pour recouvrir différents objets, en fonction de leur distance par rapport à une source d'éclairage à incrustation couleur.

21. Décoration scénique selon les revendications 19 ou 20, dans laquelle différents matériaux rétroréflechissants sont utilisés pour recouvrir différents objets, en fonction de leur orientation par rapport à une source d'éclairage à incrustation couleur.

22. Décoration scénique selon l'une quelconque des revendications 19 à 21, dans laquelle différents matériaux rétroréflechissants sont utilisés pour recouvrir différents objets, en fonction de leur orientation par rapport à une caméra de prise de vues.

23. Décoration scénique selon l'une quelconque des revendications 19 à 21, dans laquelle au moins un des objets constitue un sujet, chaque sujet étant recouvert d'un costume comprenant un des matériaux rétroréflechissants de la série.

24. Décoration scénique appropriée pour la prise de vues utilisant des techniques d'incrustation couleur, comprenant au moins un objet recouvert d'un matériau rétroréfléchissant d'une série de ces matériaux fournis et sélectionné par le procédé selon l'une quelconque des revendications 1 à 18.

25. Décoration scénique appropriée pour la prise de vues utilisant des techniques à incrustation couleur, comprenant au moins un objet recouvert par un premier matériau rétroréfléchissant fourni et sélectionné dans une série selon l'une quelconque des revendications 1 à 18, un deuxième matériau rétroréfléchissant fourni et sélectionné dans la série, comprenant une proportion d'éléments transparents revêtus différente de celle du premier matériau, étant appliqué sur la décoration scénique comme marqueur de suivi.
